# EUROPÄISCHE PATENTANMELDUNG

(11) **EP 2 239 547 A1**
(43) Veröffentlichungstag der Anmeldung: **13.10.2010**
(21) Anmeldenummer: 10158842.4
(22) Anmeldetag: 31.03.2010
(51) Int. Cl.: G01F 23/292, G01F 1/37, G01F 23/24, G01F 3/22, G01F 3/38, G01F 11/02

(54) **Flaschen-Siphon zur Gasmessung in Biogasversuchen**

(30) Priorität: 02.04.2009 DE 202009004440 U
(71) Anmelder: Leibniz-Institut für Agrartechnik Potsdam-Bornim e.V. (ATB), 14469 Potsdam (DE)
(72) Erfinder: Tölle, Rainer, 10115 Berlin (DE); Huth, Markus, 04509 Schönwölkau OT Hohenroda (DE); Mumme, Jan, 14469 Postdam OT Bornstedt (DE); Linke, Bernd, 14469 Postdam (DE)
(74) Vertreter: Schubert, Klemens

(57) **Zusammenfassung**

Die Erfindung betrifft einen Flaschen-Siphon zur Gasmessung in Biogasversuchen, welcher **dadurch gekennzeichnet ist, dass** er mit Wasser als Sperrflüssigkeit befüllbar ist, das Gas in die innere Kammer des Flaschen-Siphons einleitbar ist, das Einströmen des Gases in den Flaschen-Siphon und das Ausströmen des Gases aus dem Flaschen-Siphon durch ein elektromechanisches Drei-Wege-Ventil gesteuert wird, das Drei-Wege-Ventil die innere Kammer des Flaschen-Siphons entweder mit dem Gaseingang oder mit der äußeren Kammer und dem Gasausgang verbindet, der Flaschen-Siphon mindestens eine Elektrode zur Messung des Flüssigkeitsstandes im Flaschen-Siphon umfasst, eine in einem Gehäuse befindliche LED in den unteren Teil der inneren Kammer hineinragt, wobei diese LED auf einem Teil ihrer konvexen Gehäuseoberfläche mit einer lichtundurchlässigen Beschichtung versehen ist, und ein Fotosensor gegenüber der LED in deren Abstrahlrichtung außerhalb der Sperrflüssigkeit angeordnet ist.

Weiterhin betrifft die Erfindung ein Verfahren zur Gasmessung in Biogasversuchen unter Verwendung des erfindungsgemäßen Flaschen-Siphons.

## Beschreibung

Die vorliegende Erfindung betrifft einen Flaschen-Siphon zur Gasmessung in Biogasversuchen und ein Verfahren zur Gasmessung in Biogasversuchen unter Verwendung des erfindungsgemäßen Flaschen-Siphons.

Im Stand der Technik sind Vorrichtungen und Verfahren zur Gasmessung in Biogasversuchen bekannt.

Beim einmaligen Ansatz eines Gärversuchs nach dem Batch-Verfahren zur Bestimmung des möglichen Biogasertrages werden bei kleinen Gärgefäßen nur geringe Mengen Biogas je Zeiteinheit freigesetzt. Die Patentschrift DE 10 2004 047 560 B3, mit dem Titel "Biogas-Messeinrichtung und Verfahren zur Messung von Biogasvolumen", zeigt sehr deutlich die bei der Messung kleiner Biogasvolumina zu erwartenden Schwierigkeiten auf. In dieser genannten Patentschrift wird der freie Stand der Technik wie folgt beschrieben:
"Biogasmesseinrichtung mit einem Biogasreaktor, einem kommunizierend mit dem Biogasreaktor über eine Gasleitung für Biogas verbundenen Gasvolumenmessgerät mit einer Messkammer, die ein definiertes Messvolumen in einem Gehäuse hat, einem mit einem Gaseinlassventil gesteuerten Gaseinlass in die Messkammer, einem mit einem Gasauslassventil gesteuerten Gasauslass aus der Messkammer, einem Drucksensor zur Erfassung des atmosphärischen Drucks, einem mit der Messkammer kommunizierenden Differenzialdrucksensor zur Erfassung des Differenzdrucks zwischen dem Gasdruck in der Messkammer und dem atmosphärischen Druck oder einem aktuellen Systemdruck, und mit einer Mess-Steuer- und Auswerteeinheit, die zur Steuerung der Biogas-Messeinrichtung und Ermittlung der im Biogasreaktor erzeugten Gasvolumina in Abhängigkeit von mit dem Gasvolumen-Messgerät gemessenen Gasvolumen aufeinander folgender Messzyklen, mit den Schritten für jeden Messzyklus von:
   a) Einleitung einer Gasmenge in die Messkammer durch Öffnen des Gaseinlassventils solange, bis ein definierter Schwellen-Gasdruck erreicht ist,
   b) Schließen des Gaseinlassventils, wenn ein definierter Schwellen-Gasdruck erreicht ist,
   c) Messen der Temperatur in der Messkammer,
   d) Öffnen des Gasauslassventils für eine Entspannungszeit und
   e) Schließen des Gasauslassventils eingerichtet ist."

Da nach VDI-Richtlinie 4630 ("Vergärung organischer Stoffe Substratcharakterisierung, Probenahme, Stoffdatenerhebung, Gärversuche. April 2006, VDI-Gesellschaft Energietechnik, Fachausschuss Regenerative Energien") Laboranlagen zur Biogaserzeugung zwecks Vermeidung von Leckverlusten mit möglichst geringem Betriebsdruck gefahren werden sollen, ergeben sich nach oben beschriebenen Verfahren sehr hohe Anforderungen an den Gasdrucksensor. Von der Auflösung und Langzeitstabilität des Sensors hängt direkt die Genauigkeit des Messverfahrens ab. Das trifft für alle vorgeschlagenen Lösungen dieser Patent-Untergruppe, z. B. auch für DE 102 36 637 B3, DE 10 2004 047 560 B3, DE 101 62 286 A1 und FR 27 67 206 zu. Ein weiteres Problem dieses Funktionsprinzips ist der unkontrollierte Druckaufbau im Gärgefäß bei Ausfall der elektrischen Hilfsenergie. Deshalb bedürfen diese Messeinrichtungen eines hochwertigen Sicherheitsventils, das einerseits im Messbereich des Sensors absolut dicht sein, andererseits aber schon wenig darüber zuverlässig auslösen muss.

Deshalb wurden in der Literatur verschiedene Laborapparaturen beschrieben, die nach dem Prinzip des U-Rohrmanometers den Druckanstieg und einen damit einhergehenden Gasstrom durch das Verdrängen einer Sperrflüssigkeit messen. Dazu muss der Pegel der Sperrflüssigkeit sicher ermittelt werden. Das kann optisch durch Lichtschranken oder mittels Tauchelektroden geschehen. Die Verwendung von Lichtschranken erfolgt zum Beispiel nach Prinzipien, die in der IPC G01F23/292 "Anzeigen oder Messen eines Flüssigkeitsstandes ....durch Messen der Parameteränderungen von Licht" beschrieben sind. Die IPC G01F23/292 ist mit ca. 500 Einträgen belegt. Viele der beschriebenen Sensoren beruhen darauf, dass als Probekörper ein optisches Prisma in die Flüssigkeit eintaucht. Von einer Lichtquelle aus wird die Grundfläche eines optischen Prismas beleuchtet und das Licht von dort zu einem Empfänger reflektiert. Beispiele dafür sind in den Offenlegungsschriften DE 9201697 U1 und DE 10 2006 052 891 A1 zu finden. Beim Eintauchen des Prismas in eine Flüssigkeit mit einer höheren Brechzahl als die von Luft wird das Licht nur noch teilweise reflektiert, was mit einem Lichtempfänger detektiert werden kann. Beim Versuch einer genauen Bestimmung der Füllstandhöhe von Flüssigkeiten in Behältern treten dabei zusätzliche Schwierigkeiten mit nur langsam von der Prismenspitze ablaufender Flüssigkeit auf (siehe DE 20 2006 016 784). Ähnliche Schwierigkeiten entstehen bei der unvollständigen Benetzung eintauchender Lichtleiter.

Allen diesen Ausgestaltungen ist gemeinsam, dass bedingt durch die prismatische Form des in die Flüssigkeit eintauchenden Elements, mit steigendem Stand der Flüssigkeit eine stetige Änderung des Lichtstroms erfolgt. Die Erkennung der Unterschreitung eines bestimmten Füllstands erfolgt über die Einstellung eines elektrischen Schwellenwertes in der Auswerteschaltung des Lichtempfängers, bei dem ein Schaltvorgang ausgelöst wird. Für die genaue Bestimmung eines bestimmten Flüssigkeitsstandes ist aber ein möglichst sprunghafter Anstieg des detektierten Lichtstroms beim Über- oder Unterschreiten der gewünschten Höhe zu erreichen. Es wäre vorteilhaft, wenn sich der sprunghafte Anstieg des Lichtstroms aus der Gestaltung des Sensors selbst ergibt. Dann würden der Einfluss anderer Größen, wie Temperatur und Schwankungen der Betriebsspannung, einen geringen Einfluss auf die Schaltschwelle haben und eine genauere Erfassung des Flüssigkeitspegels möglich.

Aufgabe der vorliegenden Erfindung ist es deshalb, die Nachteile des Standes der Technik zu überwinden.

Die Aufgabe der Erfindung wird erfindungsgemäß gelöst durch die Bereitstellung eines Flaschen-Siphons zur Gasmessung in Biogasversuchen, welcher mit einem Biogasreaktor über eine Gasleitung für Biogas verbundenen ist, wobei ein Ventil einen gesteuerten Einlass und Auslass des Biogases in die Messanordnung ermöglicht, umfassend einen Drucksensor zur Erfassung des atmosphärischen Drucks, eine Mess-Steuer- und Auswerteeinheit, die zur Steuerung der Biogas-Messeinrichtung und zur Ermittlung der im Biogasreaktor erzeugten Gasvolumina in Abhängigkeit von den in aufeinander folgenden Messzyklen gemessenen Teilvolumina dient, wobei der erfindungsgemäße Flaschen-Siphon dadurch gekennzeichnet ist, dass er mit Wasser als Sperrflüssigkeit befüllbar ist, das Gas in die innere Kammer des Flaschen-Siphons einleitbar ist, das Einströmen des Gases in den Flaschen-Siphon und das Ausströmen des Gases aus dem Flaschen-Siphon durch ein elektromechanisches Drei-Wege-Ventil gesteuert wird, das Drei-Wege-Ventil die innere Kammer des Flaschen-Siphons entweder mit dem Gaseingang oder mit der äußeren Kammer und dem Gasausgang verbindet, der Flaschen-Siphon mindestens eine Elektrode zur Messung des Flüssigkeitsstandes im Flaschen-Siphon umfasst, wobei es sich bei der mindestens einen Elektrode um eine eintauchende Elektrode handelt, und wobei bei Anwesenheit nur einer Elektrode diese zentrisch in der inneren Kammer angeordnet ist, eine in einem Gehäuse befindliche LED in den unteren Teil der inneren Kammer hineinragt, wobei diese LED auf einem Teil ihrer konvexen Gehäuseoberfläche mit einer lichtundurchlässigen Beschichtung versehen ist, und ein Fotosensor gegenüber der LED in deren Abstrahlrichtung außerhalb der Sperrflüssigkeit angeordnet ist.

Bevorzugt ist ein Flaschen-Siphon, der dadurch gekennzeichnet ist, dass sich in der inneren Kammer eine zweite Elektrode befindet und die Spitzen der beiden Elektroden in der inneren Kammer in unterschiedlichen Höhen gegenüber dem Pegel der Sperrflüssigkeit angeordnet sind.

Besonders bevorzugt ist ein Flaschen-Siphon, der dadurch gekennzeichnet ist, dass sich anstelle der LED und des Fotosensors in der äußeren Kammer eine Elektrode befindet, die derart angeordnet ist, dass sie bei Erreichen des unteren Arbeitsniveaus in die Sperrflüssigkeit eintaucht.

Erfindungsgemäß bevorzugt ist ein Flaschen-Siphon, der dadurch gekennzeichnet ist, dass das Drei-Wege-Ventil im Zustand ohne Strom den Gaseingang mit der inneren Kammer verbindet.

Weiterhin erfindungsgemäß bevorzugt ist ein Flaschen-Siphon, der dadurch gekennzeichnet ist, dass das Drei-Wege-Ventil im Zustand mit Strom die innere Kammer mit der äußeren Kammer und dem Gasausgang verbindet.

In einem bevorzugten Ausführungsbeispiel der Erfindung ist der Flaschen-Siphon **dadurch gekennzeichnet, dass** in die innere Kammer eine Kanüle mit Absperrhahn zur Befüllung mit Sperrflüssigkeit eintaucht.

In einem weiteren bevorzugten Ausführungsbeispiel ist der Flaschen-Siphon **dadurch gekennzeichnet, dass** in die äußere Kammer eine Kanüle mit Absperrhahn zur Befüllung mit Sperrflüssigkeit eintaucht.

Die Aufgabe der Erfindung wird weiterhin durch ein Verfahren zur Gasmessung in Biogasversuchen unter Verwendung des erfindungsgemäßen Flaschen-Siphons gelöst, wobei man a) den Flaschen-Siphon mit Wasser als Sperrflüssig befüllt, b) das Gas in die innere Kammer des Flaschen-Siphons einleitet, c) das Einströmen des Gases in den Flaschen-Siphon und das Ausströmen des Gases aus dem Flaschen-Siphon durch ein elektromechanisches Drei-Wege-Ventil steuert, d) den Flüssigkeitsstand im Flaschen-Siphon durch die mindestens eine Elektrode erfasst, e) den Flüssigkeitsstand durch das Eintauchen der Spitze der Elektrode in die Sperrflüssigkeit bestimmt, f) den Füllstand der inneren Kammer mit Biogas durch eine aus der Sperrflüssigkeit auftauchende LED erfasst, welche auf dem konvexen Teil des Gehäuses eine Licht undurchlässige Beschichtung trägt, g) die Verbindung zwischen innerer Kammer, äußerer Kammer und dem Gasausgang mittels des Dreiwege-Ventils dadurch schaltet, dass Licht von der LED auf den Fotosensor fällt, h) die Verbindung zwischen innerer Kammer und dem Gaseingang mittels des Dreiwege-Ventils dadurch schaltet, dass die Sperrflüssigkeit die Elektrode erreicht und i) durch Zählen der Schaltvorgänge des Ventils auf die durch den Flaschen-Siphon geflossene Gasmenge schließt.

Die Aufgabe wird erfindungsgemäß also dadurch gelöst, dass der in die Flüssigkeit 41 ein- oder aus der Flüssigkeit auftauchende Probekörper das Gehäuse einer LED 45 ist. Diese LED 45 ist auf Teilen der konvexen Gehäuseoberfläche mit einer lichtundurchlässigen Beschichtung 49 versehen. Der Schatten dieser Beschichtung 49 fällt im benetzten Zustand auf einen Fotosensor 46, der sich vorzugsweise vor der LED 45 befindet. Im unbenetzten Zustand wird der Schatten überstrahlt. Mit Größe, Position und Form der Beschichtung 49 lassen sich der Unterschied in den Brechzahlen von LED-Gehäuse und Flüssigkeit 41 sowie die relative Lage des Lichtempfängers berücksichtigen.

Die Vorteile einer solchen Anordnung bestehen im Wegfall spezieller Prismen oder Lichtleiter. Es können sehr preiswerte LEDs mit handelsüblicher Bauform zum Einsatz gelangen. Das Problem anhaftender Flüssigkeit betrifft überwiegend die für Licht undurchlässigen Flächen der Beschichtung. Die Änderung des Lichtstroms beim Auf- oder Eintauchen weist einen stark nichtlinearen Verlauf auf, der sich gut zum Feststellen einer Grenzwertüberschreitung eignet.

Die genannten Anforderungen an die Druckmessung und Überdrucksicherung werden erfindungsgemäß durch einen Flaschen-Siphon 1 zur Gasmessung gelöst, der folgende Vorteile aufweist:
1. Möglicher Überdruck wird durch den Einsatz einer Tauchung auch bei Ausfall der Hilfsenergie abgebaut.
2. Als Sperrflüssigkeit zwischen Gärraum und Umwelt dient Wasser, dessen Pegelhöhe ein Maß für den anliegenden Druck darstellt. Daher können auch bei geringen Drücken Gasvolumina genau erfasst werden. Der Zusammenhang zwischen Temperatur und Dichte von Wasser gilt als gut untersucht. Das ermöglicht eine Korrektur der Volumenmessung bei sich ändernder Temperatur und sorgt für eine Langzeitstabilität.
3. Der relativ schnell steigende Pegel der Sperrflüssigkeit wird mittels Änderung des elektrischen Widerstands an einer Tauchelektrode gemessen.
4. Das untere Niveau der Sperrflüssigkeit wird mittels eines optischen Sensors genau erkannt oder mittels einer zweiten Tauchelektrode bestimmt.
5. Es werden nur eintauchende Elektroden verwendet, was Probleme mit langsam ablaufenden Flüssigkeiten vermeidet.
6. Es wird nur ein 3-Wege-Ventil benötigt.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 zeigt eine Anordnung zur optischen Kontrolle eines Flüssigkeitsstandes;
Fig. 2 zeigt die Widerstandsänderung des Fotosensors 46 beim Auftauchen der LED 45; hierbei ist auf der X-Achse die Höhe H des Flüssigkeitspegels in mm und auf der Y-Achse der Widerstand R des Fotosensors in kOhm dargestellt; die Werte für eine LED mit Farbfleck sind als ausfüllte Quadrate dargestellt und die Werte der LED ohne Farbfleck sind als Punkte dargestellt;
Fig. 3 zeigt den Flaschen-Siphon 1 beim Befüllen mit Sperrflüssigkeit 41;
Fig. 4 zeigt den Flaschen-Siphon 1 mit Sperrflüssigkeit 41 am unteren Arbeitsniveau;
Fig. 5 zeigt den Flaschen-Siphon 1 mit Sperrflüssigkeit 41 am oberen Arbeitsniveau;
Fig. 6 zeigt den Flaschen-Siphon 1, der als Überdruckventil arbeitet;
Fig. 7 zeigt den Flaschen-Siphon 1 mit zwei Elektroden 44, 47 zur Messung in zwei Strömungsrichtungen;
Fig. 8 zeigt den Flaschen-Siphon 1 mit drei Elektroden 44, 47, 48 ohne optische Abtastung des Flüssigkeitsniveaus.

Nachfolgend werden bevorzugte Ausführungsbeispiele der Erfindung erläutert:

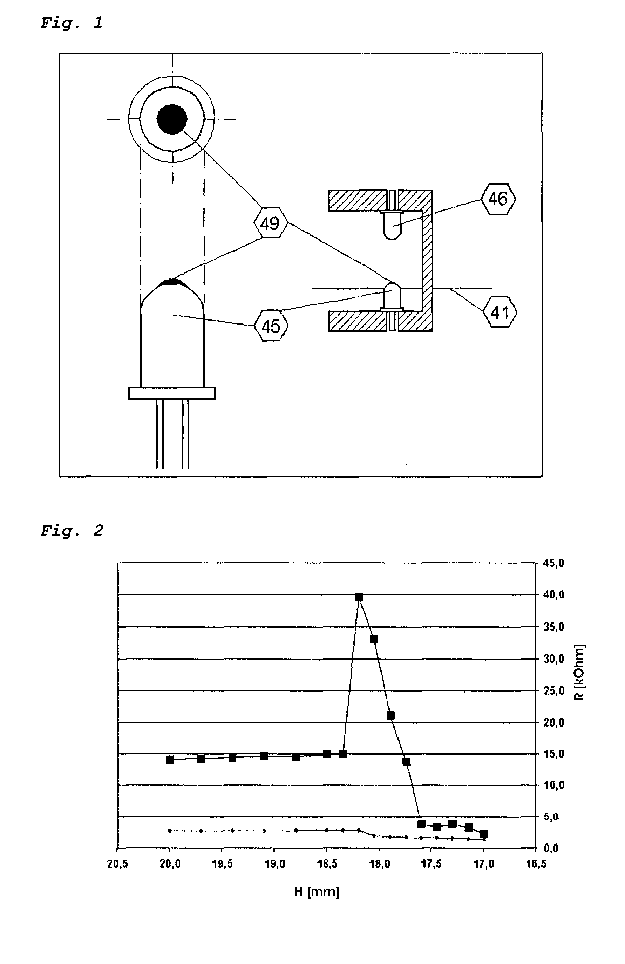

Fig. 1 zeigt eine Anordnung zur Feststellung der Unterschreitung eines bestimmten Flüssigkeitsstandes.
Auf dem Gehäuse einer LED 45, welche eine blaue Lichtfarbe besitzt, ist eine lichtundurchlässige Beschichtung 49, z. B. in Form eines Farbanstriches, aufgebracht. Die verwendete Farbe ist in der zu detektierenden Flüssigkeit 41 unlöslich. In Abstrahlrichtung der LED 45 befindet sich der Fotosensor 46 in der Luft über dem Höchststand der Sperrflüssigkeit 41. Der Einfluss von Transparenz und
Farbe der Flüssigkeit 41 auf den detektierten Flüssigkeitsstand ist sehr gering, solange die Flüssigkeit 41 vollständig von der LED 45 abfließt.

Die beiden Kurven des elektrischen Widerstands, die in Fig. 2 gezeigt sind, verdeutlichen die vorteilhafte Wirkung der lichtundurchlässigen Beschichtung 49 der LED 45.

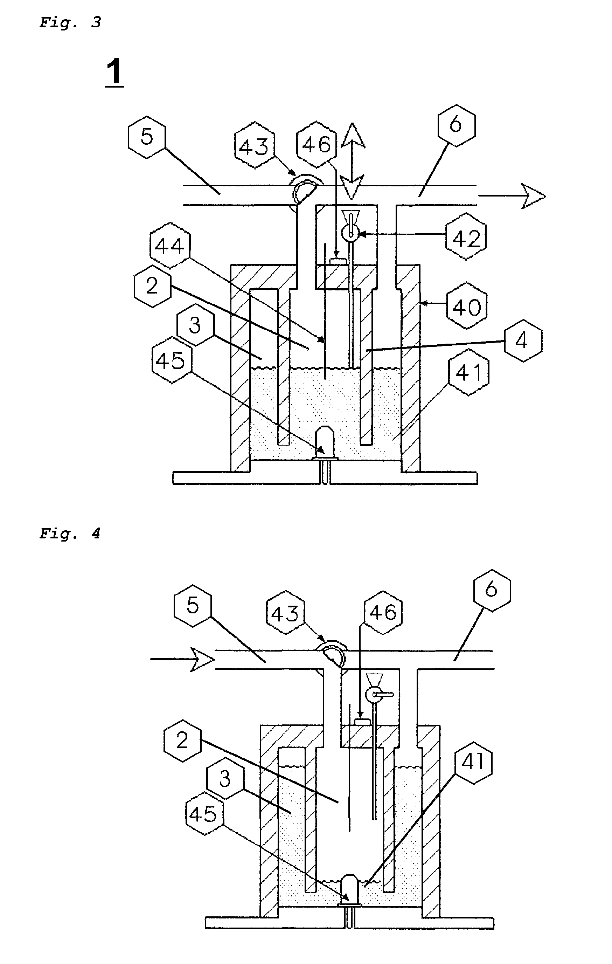

Der Flaschen-Siphon 1 zur Gasmessung nach Fig. 3 besteht aus einem Gefäß 40, in das ein Rohr 4 aus gleichem Material oder aus einem anderen Material eintaucht. Dadurch entstehen eine innere Kammer 2 und eine äußere Kammer 3, die durch eine Sperrflüssigkeit 41 gasdicht voneinander getrennt sind. In die innere Kammer 2 taucht eine Kanüle 42 mit Absperrhahn ein. Diese Kanüle 42 dient dem Befüllen des Flaschen-Siphons 1 mit der Sperrflüssigkeit 41. Dazu wird der Flaschen-Siphon 1 zuerst mit einem Überschuss an Sperrflüssigkeit 41 gefüllt, die dann so lange wieder abgesaugt wird, bis kein Rückfluss mehr erfolgt. Diesen Zustand der korrekten Füllung zeigt die Fig. 3.

Das Ventil 43, ein 3/2-Wege-Ventil (3/2: Wege-Ventil mit drei Anschlüssen und zwei Schalstellungen), verbindet die innere Kammer 2 entweder mit dem zuströmenden Gas oder mit der äußeren Kammer 3 und dem Gasausgang 6.

Die zentrisch angeordnete Elektrode 44 taucht bei Normbefüllung und Druckausgleich zwischen innerer Kammer 2 und äußerer Kammer 3 in die Sperrflüssigkeit 41 ein. Mit Hilfe der Elektrode 44 kann der Füllstand im oberen Teil der inneren Kammer 2 elektrisch gemessen werden.

In den unteren Teil der inneren Kammer 2 ragt eine LED 45 hinein. Herrscht auf der Eingangsseite ein höherer Gasdruck als am Ausgang, sinkt der Pegel der Sperrflüssigkeit 41 ab. Reicht die LED 45 in die Gasphase hinein, fällt das Licht der LED 45 auf den Fotosensor 46. Diesen Zustand zeigt Fig. 4.

Das Licht auf dem Fotosensor 46 bewirkt das Schalten des Ventils 43, wodurch eine Verbindung zwischen innerer Kammer 2 und äußerer Kammer 3 sowie dem Gasausgang 6 hergestellt wird. Jetzt beginnt sich der Niveauunterschied zwischen innerer Kammer 2 und äußerer Kammer 3 durch die wirkende Schwerkraft auszugleichen.

Erreicht die Sperrflüssigkeit 41 die Elektrode 44, schaltet das Ventil 43 erneut und verbindet die innere Kammer 2 wieder mit dem Gaseingang 5. Damit beginnt der nächste Messzyklus. Durch Zählen der Schaltvorgänge kann so auf die durch den Flaschen-Siphon geflossene Gasmenge geschlossen werden.

Mehrere außergewöhnliche Zustände bedürfen einer besonderen Behandlung.

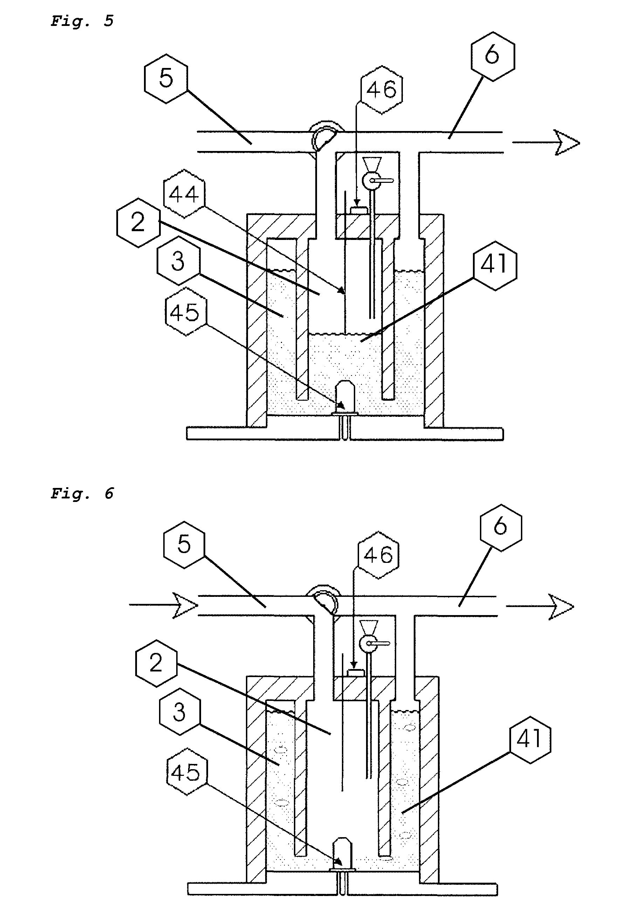

Das betrifft einmal den Stromausfall bei weiterer Gasentwicklung am Eingang. Im Zustand nach Fig. 6 ist das Ventil 43 ohne Strom und das Biogas tritt unter vollständiger Verdrängung der Sperrflüssigkeit 41 aus der inneren Kammer 2 in die äußere Kammer 3 über. Damit ist die Forderung nach Abbau des Überdruckes ohne Hilfsenergie erfüllt, so dass auf ein Sicherheitsventil verzichtet werden kann.

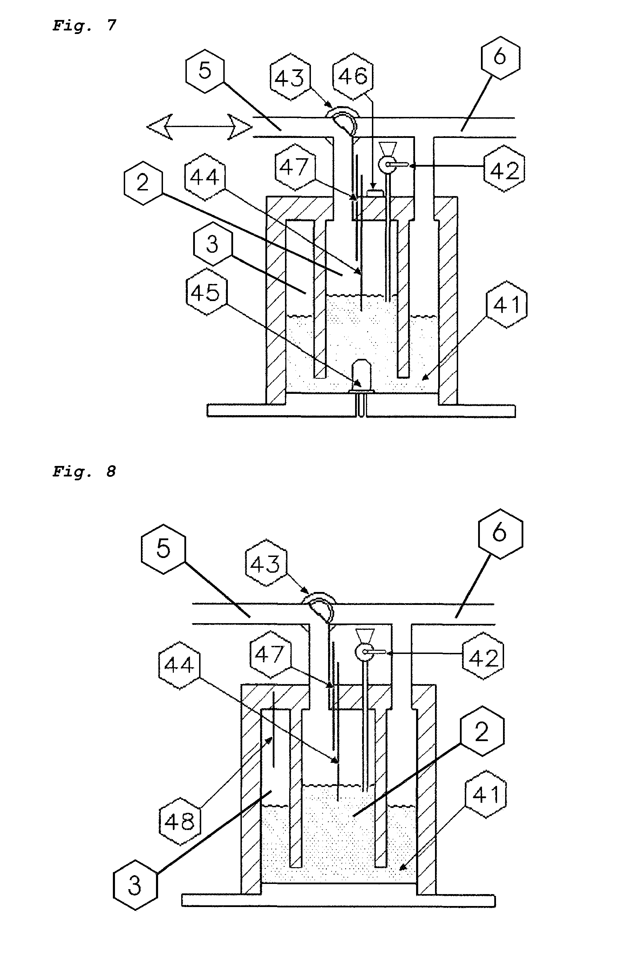

Liegt ein Unterdruck am Gaseingang 5 oder ein Überdruck am Gasausgang 6 an, besteht die Gefahr eines unkontrollierten Rückströmens des Gases. Dieser Zustand wird in Fig. 7 veranschaulicht.

Messtechnisch lässt sich dieser Zustand durch Widerstandsmessung an der Elektrode 44 erfassen. Eine mögliche Reaktion darauf ist das Umschalten des Ventils 43. Dadurch gleichen sich die Pegel in beiden Kammern 2, 3 wieder an und ein weiterer Rückfluss des Gases wird verhindert. Diese Stellung des Ventils 43 kann jedoch nach einiger Zeit zu einem unbemerkten Überdruck am Gaseingang 5 führen. Deshalb ist es zweckmäßig, in geeigneten Zeitabständen das Ventil 43 erneut zu betätigen, um den Druckzustand am Gaseingang 5 zu prüfen. So betrieben, wird zwar der Rückfluss weitgehend verhindert, jedoch ist mit dem Flaschen-Siphon die Gasvolumenbestimmung nur in einer Richtung möglich.

Durch den Einbau einer zweiten, höher endenden Elektrode 47, lässt sich die Apparatur auch in Gegenrichtung betreiben. In der rückläufigen Betriebsart ist die je Schaltspiel des Ventils 43 transportierte Gasmenge jedoch vom aktuellen Füllstand der Sperrflüssigkeit 41 abhängig. Deshalb sollte in dieser Betriebsart dem Flaschen-Siphon 1 ein Kondensatabscheider vorgeschaltet werden.

Als Alternative zu LED 45 und Fotosensor 46 kann eine weitere Elektrode 48 in der äußeren Kammer 3 dienen. Mit dieser Elektrode 48 kann das untere Arbeitsniveau durch Eintauchen in die Sperrflüssigkeit 41 bestimmt werden. Die Anordnung der Elektrode 48 in der äußeren Kammer 3 bewirkt, dass nur eintauchende Elektroden verwendet werden, was Probleme mit langsam ablaufenden Flüssigkeiten vermeidet. Allerdings muss in diesem Fall für eine waagerechte Aufstellung des Flaschen-Siphons 1 gesorgt werden.

Dem Fachmann ist offensichtlich, dass die erfindungsgemäße Vorrichtung und das erfindungsgemäße Verfahren nicht nur zur Volumenbestimmung von Biogas verwendet werden können. Mittels der erfindungsgemäßen Vorrichtung und dem erfindungsgemäßen Verfahren lassen sich auch die Volumina von Gasen bestimmen, die keine Biogase sind.

### Bezugszeichenliste

- 1: Flaschen-Siphon
- 2: innere Kammer
- 3: äußere Kammer
- 4: Rohr
- 5: Gaseingang
- 6: Gasausgang
- 40: Gefäß
- 41: Sperrflüssigkeit
- 42: Kanüle mit Absperrhahn
- 43: Ventil 3/2
- 44: zentrisch angeordnete Elektrode
- 45: LED
- 46: Fotosensor
- 47: höher endende Elektrode
- 48: Elektrode in der äußeren Kammer
- 49: Beschichtung der LED

## Patentansprüche

1. Flaschen-Siphon (1) zur Gasmessung in Biogasversuchen, welcher mit einem Biogasreaktor über eine Gasleitung für Biogas verbundenen ist, wobei ein Ventil (43) einen gesteuerten Einlass und Auslass des Biogases in die Messanordnung ermöglicht,
umfassend einen Drucksensor zur Erfassung des atmosphärischen Drucks,
eine Mess-Steuer- und Auswerteeinheit, die zur Steuerung der Biogas-Messeinrichtung und zur Ermittlung der im Biogasreaktor erzeugten Gasvolumina in Abhängigkeit von den in aufeinander folgenden Messzyklen gemessenen Teilvolumina dient,
**dadurch gekennzeichnet, dass**
der Flaschen-Siphon (1) mit Wasser als Sperrflüssigkeit (41) befüllbar ist,
das Gas in die innere Kammer (2) des Flaschen-Siphons (1) einleitbar ist,
das Einströmen des Gases in den Flaschen-Siphon (1) und das Ausströmen des Gases aus dem Flaschen-Siphon (1) durch ein elektromechanisches Drei-Wege-Ventil (43) gesteuert wird,
das Drei-Wege-Ventil (43) die innere Kammer (2) des Flaschen-Siphons (1) entweder mit dem Gaseingang (5) oder mit der äußeren Kammer (3) und dem Gasausgang (6) verbindet,
der Flaschen-Siphon (1) mindestens eine Elektrode (44) zur Messung des Flüssigkeitsstandes im Flaschen-Siphon (1) umfasst, wobei es sich bei der mindestens einen Elektrode (44) um eine eintauchende Elektrode handelt,
und wobei bei Anwesenheit nur einer Elektrode (44) diese zentrisch in der inneren Kammer (2) angeordnet ist,
eine in einem Gehäuse befindliche LED (45) in den unteren Teil der inneren Kammer (2) hineinragt, wobei diese LED (45) auf einem Teil ihrer konvexen Gehäuseoberfläche mit einer lichtundurchlässigen Beschichtung (49) versehen ist,
und ein Fotosensor (46) gegenüber der LED (45) in deren Abstrahlrichtung außerhalb der Sperrflüssigkeit (41) angeordnet ist.

2. Flaschen-Siphon (1) gemäß Anspruch 1, **dadurch gekennzeichnet, dass** sich in der inneren Kammer (2) eine zweite Elektrode (47) befindet und die Spitzen der beiden Elektroden (44, 47) in der inneren Kammer (2) in unterschiedlichen Höhen gegenüber dem Pegel der Sperrflüssigkeit (41) angeordnet sind.

3. Flaschen-Siphon (1) gemäß einem der vorangehenden Ansprüche, **dadurch gekennzeichnet, dass** sich anstelle der LED (45) und des Fotosensors (46) in der äußeren Kammer (3) eine Elektrode (48) befindet, die derart angeordnet ist, dass sie bei Erreichen des unteren Arbeitsniveaus in die Sperrflüssigkeit (41) eintaucht.

4. Flaschen-Siphon (1) gemäß einem der vorangehenden Ansprüche, **dadurch gekennzeichnet, dass** das Drei-Wege-Ventil (43) im Zustand ohne Strom den Gaseingang (5) mit der inneren Kammer (2) verbindet.

5. Flaschen-Siphon (1) gemäß einem der vorangehenden Ansprüche, **dadurch gekennzeichnet, dass** das Drei-Wege-Ventil (43) im Zustand mit Strom die innere Kammer (2) mit der äußeren Kammer (3) und dem Gasausgang (6) verbindet.

6. Flaschen-Siphon (1) gemäß einem der vorangehenden Ansprüche, **dadurch gekennzeichnet, dass** in die innere Kammer (2) eine Kanüle (42) mit Absperrhahn zur Befüllung mit Sperrflüssigkeit (41) eintaucht.

7. Flaschen-Siphon (1) gemäß einem der Ansprüche 1 bis 5, **dadurch gekennzeichnet, dass** in die äußere Kammer (3) eine Kanüle (42) mit Absperrhahn zur Befüllung mit Sperrflüssigkeit (41) eintaucht.

8. Verfahren zur Gasmessung in Biogasversuchen unter Verwendung des Flaschen-Siphons (1) gemäß Anspruch 1, wobei man
a) den Flaschen-Siphon (1) mit Wasser als Sperrflüssigkeit (41) befüllt,
b) das Gas in die innere Kammer (2) des Flaschen-Siphons (1) einleitet,
c) das Einströmen des Gases in den Flaschen-Siphon (1) und das Ausströmen des Gases aus dem Flaschen-Siphon (1) durch ein elektromechanisches Drei-Wege-Ventil (43) steuert,
d) den Flüssigkeitsstand im Flaschen-Siphon (1) durch die mindestens eine Elektrode (44) erfasst,
e) den Flüssigkeitsstand durch das Eintauchen der Spitze der Elektrode (44) in die Sperrflüssigkeit (41) bestimmt,
f) den Füllstand der inneren Kammer (2) mit Biogas durch eine aus der Sperrflüssigkeit (41) auftauchende LED (45) erfasst, welche auf dem konvexen Teil des Gehäuses eine Licht undurchlässige Beschichtung (49) trägt,
g) die Verbindung zwischen innerer Kammer (2), äußerer Kammer (3) und dem Gasausgang (6) mittels des Dreiwege-Ventils (43) **dadurch** schaltet, dass Licht von der LED (45) auf den Fotosensor (46) fällt,
h) die Verbindung zwischen innerer Kammer (2) und dem Gaseingang (5) mittels des Dreiwege-Ventils (43) **dadurch** schaltet, dass die Sperrflüssigkeit (41) die Elektrode (44) erreicht,
i) durch Zählen der Schaltvorgänge des Ventils (43) auf die durch den Flaschen-Siphon (1) geflossene Gasmenge schließt.
